# EUROPEAN PATENT SPECIFICATION

(11) **EP 0 453 205 B1**
(45) Date of publication and mention of the grant of the patent: **28.06.1995**
(21) Application number: 91303293.4
(22) Date of filing: 15.04.1991
(51) Int. Cl.: C08F 10/00, C08F 4/70

(54) **Process for producing polyolefin**
Verfahren zur Herstellung von Polyolefin
Procédé de production de polyoléfine

(30) Priority: 16.04.1990 JP 97520/90; 02.05.1990 JP 115136/90; 02.05.1990 JP 115137/90
(43) Date of publication of application: 23.10.1991
(73) Proprietor: Tosoh Corporation, Shinnanyo-shi, Yamaguchi-ken, 746 (JP)
(72) Inventor: Soga, Kazuo, Chiyoda-ku, Tokyo (JP); Naito, Yutaka, Mie-gun, Mie-ken (JP)
(74) Representative: Kearney, Kevin David Nicholas

(56) References cited:
- EP-A- 0 202 670
- FR-A- 1 575 779

## Description

### Background of the Invention:

### Field of the Invention:

The present invention relates to a process for producing a polyolefin through polymerization of α-olefin with a specific catalyst system.

### Description of the Related Art:

A generally known method for polymerizing α-olefin at a relatively low pressure employs a catalyst system composed of a transition metal compound of the elements of Group IV to Group VI of the periodic table and an organic aluminium compound, namely a Ziegler catalyst.

Japanese Patent Publication No. Sho 32-1545, for example, discloses that ethylene polymerizes in the presence of a catalyst comprising a mixture of a compound of a metal of Groups IVa to VIa of the periodic table, or thorium or uranium with trialkylaluminium to give a high molecular polyethylene having a molecular weight of higher than 2000. The above Patent Publication also discloses that a low molecular polymerization product of ethylene, particularly 1-butene, is derived in the presence of akylaluminium, and nickel or cobalt compounds.

Manufacture of a copolymer of ethylene with vinyl acetate with this type of catalyst has not been achieved because normal catalysts for olefin polymerization represented by titanium compounds and chromium compounds will be poisoned by an unsaturated compound having a heteroatom.

On the other hand, compounds of rhodium or ruthenium, which characteristically have stable catalytic activity with high selectivity in various catalytic reactions, are investigated widely for reactions such as hydrogenation, isomerization, polymerization and oxydation of hydrocarbons. For example, a carbonyl complex of rhodium is widely employed in hydroformylation of an olefin, synthesis of acetic acid from methanol, and other reactions. The rhodium compounds called Wilkinson complexes and the like are known to be highly active in hydrogenation and hydrosilylation of olefins and ketones. Rhodium compounds are known also to be active in trimerization of acetylene and oligomerization of olefins and diens.

Ruthenium compounds are effective under mild conditions in hydrogenation of unsaturated bonds, hydrosilylation, oxidation-reduction reactions caused by hydrogen transfer, and other reactions, and are employed in various fields.

However, few investigations have been made regarding the use of these compounds as a catalyst for polymerization of olefins.

The inventors of the present invention made comprehensive studies on the use of rhodium or ruthenium compounds as olefin polymerization catalysts to find a novel catalyst system having stable catalyst activity with high selectivity. Consequently, the inventors found that a catalyst system comprising a combination of such a compound with an organometallic compound of the elements of Group I to Group III of the periodic table is suitable for homopolymerization and copolymerization of α-olefins and copolymerization of ethylene with vinyl acetate, and have completed the present invention.

### Summary of the Invention:

The present invention uses a catalyst system having stable catalytic activity with high selectivity in olefin polymerization.

The present invention provides a process for producing a polyolefin through polymerization of α-olefin in the presence of a catalyst comprising a component A composed of at least one compound selected from halogen compounds and oxygen-containing compounds of rhodium or ruthenium and a component B composed of at least one organometallic compound of Groups I to III of the periodic table.

Preferred embodiments of the invention are given in the dependent claims.

The present invention also provides a process for producing ethylene-vinyl acetate copolymer through copolymerization of ethylene with vinyl acetate in the presence of the above catalyst.

### Brief Description of the Drawings:

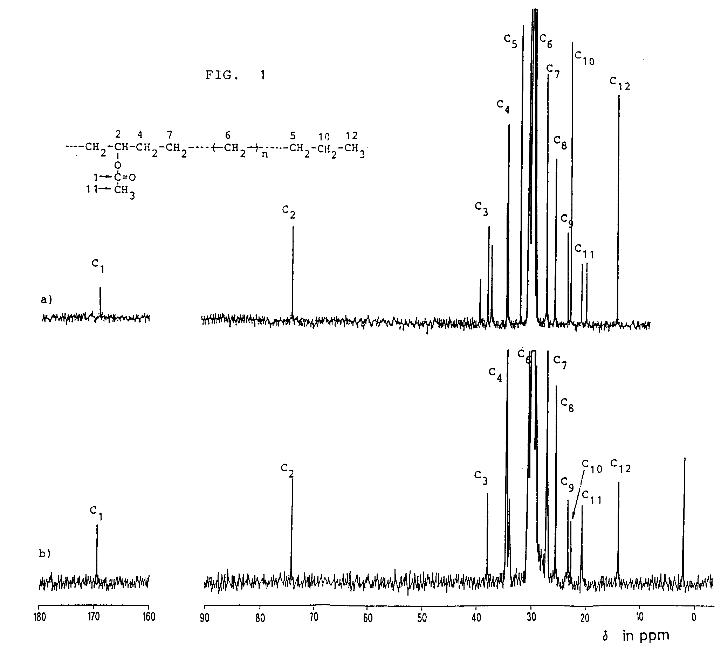

Fig. 1 is ¹³C-NMR spectra of the EVA produced in Example 2 and a commercial high-pressure EVA.

### Detailed Description of the Preferred Embodiment:

The component A employed in the present invention includes, as the halogen compounds of rhodium fluorides, chlorides, bromides, iodides and perchlorates of rhodium: more specifically including rhodium (III) fluoride (hereinafter the number in the parentheses denotes the valency of the constituent metal), rhodium (IV) fluoride, rhodium (II) chloride, rhodium (III) chloride, rhodium (II) bromide, rhodium (III) bromide, rhodium (II) iodide, rhodium (III) iodide, rhodium (III) perchlorate and sodium hexachlororhodate (III).

The oxygen-containing organic compounds of rhodium include rhodium (II) acetate and tris(acetylacetonato)rhodium (III).

The halogen compounds of ruthenium include fluorides, chlorides, bromides, iodides and perchlorates: more specifically including ruthenium (III) fluoride, ruthenium (IV) fluoride, ruthenium (II) chloride, ruthenium (III) chloride, ruthenium (III) bromide, ruthenium (III) iodide and potassium hexachlororuthenate (III). The oxygen-containing organic ruthenium compounds include ruthenium (II) acetate and tris(acetylacetonato)ruthenium (III). These compounds may be anhydrous salts, hydrates having 1 to 6 water molecules, or complex compounds having a ligand of an alcohol, pyridine, ethylenediamine and triphenylphosphine.

The aforementioned component A may be any one of, or a mixture of, two or more of the compounds of rhodium or ruthenium. The component A in the present invention may be used as a rhodium- or ruthenium compound itself or used in a supported state on a carrier eg an organic carrier.

The supported form of the rhodium or ruthenium compound on a carrier is more profitable since it raises catalytic activity per unit amount of the noble metal element. Applicable carriers include inorganic substances such as metal oxides and metal halides. The typical examples are active carbon, alumina, silica, zeolite, magnesium chloride, magnesium bromide, calcium chloride, copper chlorides and iron chlorides. Further, substances which are convertible to a carrier by reaction are also applicable as the carrier. An example is a reaction product of metallic magnesium with an alcohol.

The rhodium or ruthenium compound may be made to be supported on an inorganic carrier by a conventional method usually employed in the technical field of catalyst production. For example, the rhodium- or ruthenium compound with an inorganic carrier may be pulverized together under an inert gas atmosphere in a ball mill. In another example, an inorganic carrier is immersed in a solution of rhodium or ruthenium compound, and subsequently is dried to support the compound. The quantity of the compound to be supported is preferably in the range of from 0.001% to 30% by weight, but is not limited thereto.

The organometallic compounds of the elements of Groups I to III of the periodic table, which are used as the component B of the present invention, include alkyllithiums, alkylsodiums, alkylaluminiums, alklzincs and alkylmagnesiums; more specifically including butyllithium, butylsodium, trimethylaluminium, triethylaluminium, triisobutylaluminium, diethylaluminium chloride, ethylaluminium sesquichloride, ethylaluminium dichloride, diethylzinc, butylethylmagnesium and butylmagnesium chloride. Aluminoxane compounds are also useful. These may be constructed by linking two or more aluminium atoms through an oxygen. Preferable organometallic compounds are organic aluminium compounds such as triethylaluminium, triisobutylaluminium and diethylaluminium chloride.

One or a mixture of two or more of the organometallic compounds may be used as the component B.

In practicing the present invention by use of a solvent, the quantity of the component A to be used is preferably in the range of from 0.001 to 2.5 mol in terms of rhodium or ruthenium atoms per liter of the solvent or per liter of the reactor volume. A higher concentration of the compound may be employed depending on the reaction conditions.

The quantity of the component B to be used is similarly in the range of from 0.02 to 50 mol in terms of the metal atoms of Groups I to III of the periodic table per liter of the solvent or per liter of the reactor volume.

The polymerization of α-olefin or the copolymerization of ethylene with vinyl acetate of the present invention may be conducted in a liquid phase or a gaseous phase. Polymerization in a liquid phase is conducted preferably by use of an inert solvent. The inert solvent may be any of those used normally in the related technical fields, particularly suitable being aliphatic hydrocarbons having 4 to 20 carbons such as isobutane, pentane, hexane, heptane, and cyclohexane, and aromatic hydrocarbons such as toluene, and xylene.

The α-olefin applicable in the present invention includes ethylene, propylene, 1-butene, 1-pentene, 1-hexene, 1-octene and 4-methyl-1-pentene, and their mixtures. The polymerization of the present invention can be practiced not only in one-stage polymerization which conducts polymerization under fixed conditions, but also in multi-stage polymerization which conducts polymerization under a plurality of polymerization conditions.

The polymerization conditions in the present invention are not limited. For example, the polymerization temperature may be in the range of from 20 to 300°C, and the polymerization pressure may be in the range of from 2 to 49 bar G (2 to 50 Kg/cm²G).

The content of vinyl acetate in EVA in the present invention may be controlled to be within the range of from 0.001% to 50% by weight by suitably selecting the polymerization conditions.

The polyolefins produced by use of the novel catalyst of the present invention are suffiently high-molecular, and may be molded in the same manner as usual polyolefins in a conventional polyolefin molding method, such as injection molding, extrusion molding and blow molding. Yet higher molecular weights may easily be achieved by use of the novel catalyst of the present invention. A super-high molecular polyethylene which is a general purpose engineering plastics is readily producible according to the present invention.

Copolymerization of two or more kinds of α-olefins is also feasible, allowing production of polyolefins having various characteristics in a simple manner.

Copolymerization of ethylene with vinyl acetate can also be practiced. Heretofore, EVA has been produced in the presence of a radical polymerization catalyst, and has been considered not to be producible with an ionic polymerization catalyst. However, the present invention shows that the EVA can be produced even with an ionic polymerization catalyst. Therefore, the present invention has pioneered an EVA production with an ionic polymerization catalyst.

The invention may be put into practice in various ways and a number of specific embodiments will be described to illustrate the invention with reference to the accompanying examples. The present invention is not limited by the examples in any way. In the examples, the molecular weight (Mv) of the polyethylene was derived from an intrinsic viscosity ([η]) at 135°C in decalin solution according to the equation: M = 2.51 x 10⁴[η] ^{1.23} shown in Japanese Patent Publication No. Sho 32-1546.

### Example 1

A 100-ml stainless steel reactor equipped with a stirrer was purged thoroughly with nitrogen. Therein, 30 ml of toluene, and 0.026 g of rhodium (III) chloride trihydrate as the component A were placed. The reactor was cooled with liquid nitrogen. Thereafter, 1 mmol of triethylaluminium in toluene as the component B, and 0.20 mol of ethylene were added to the reactor sequentially, and the internal temperature of the reactor was raised quickly to 40°C to initiate the polymerization reaction. Three hours later, the reaction mixture was poured into a large amount of hydrochloric acid/methanol solution to stop the reaction. The yield of the polymer was 0.015 g. The catalyst activity was 150 g/mol-Rh.

### Example 2

A rhodium compound supported on magnesium chloride was used as the component A. 0.263 g (1.0 mmol) of rhodium (III) chloride trihydrate and 8.0 g of magnesium chloride were placed under a nitrogen atmosphere in a 100-ml stainless steel ball mill, and were pulverized together for 48 hours to cause the rhodium compound to be supported on the magnesium chloride carrier. The rhodium content thereof was 1.24% by weight.

Ethylene was polymerized in the same manner as in Example 1 except that 0.5 g (equivalent to 0.058 mmol of Rh) of the component A prepared as above was used. The yield of the polymer was 1.23 g, and the catalyst activity was 21200 g/mol-Rh. The [η] of the polymer was 14.4 dl/g, from which the molecular weight was calculated to be 670,000, being sufficiently high. The melting point of the polymer was 136°C according to DSC (differential scanning calorimetry) analysis.

### Example 3

A 1-liter stainless steel reactor equipped with an electromagnetic stirrer was purged thoroughly with nitrogen. Therein 0.5 liter of toluene was placed and the internal temperature was brought to 80°C. Thereto 1.0 mmol of triethylaluminium as the component B, and 1.0 g of the component A prepared in Example 2 were sequentially added. The pressure in the reactor was adjusted with nitrogen to 0.5 Kg/cm²G and the polymerization conducted for 3 hours. The resulting polymer was separate from the solvent by filtration, and washed with hydrochloric acid/methanol, and then dried. 6.01 g of polymer was obtained. The catalyst activity was 51800 g/mol-Rh, and the [η] was 10.1 dl/g, which corresponds to a suffiently high molecular weight of 430,000.

### Example 4

A rhodium compound supported on silica was used as the component A. In a 200-ml glass flask, 0.18 g (0.68 mmol) of rhodium (III) chloride trihydrate was dissolved in 50 ml of dehydrated tetrahydrofuran. Thereto, 3.8 g calcined and dried silica (#952, made by Fuji Davidson K.K.) was added, and the tetrahydrofuran was completely evaporated off by reducing the pressure; the resultant product was used as the component A. The rhodium content of component A was 1.47% by weight.

By use of 0.5 g (0.07 mmol Rh) of component A prepared above, ethylene was polymerized in the same manner as in Example 2. 0.27 g of polymer was obtained. The catalyst activity was 3900 g/mol-Rh.

### Example 5

A rhodium compound supported on silica was used as the component A. In a 200-ml glass flask, 0.18 g (0.68 mmol) of rhodium (III) chloride trihydrate was dissolved in 20 ml of dehydrated tetrahydrofuran. 50 ml of a separately prepared tetrahydrofuran solution containing 0.65 g of magnesium chloride was added to and mixed with the above solution. Thereto, 3.8 g of calcined and dried silica (#952, made by Fuji Davidson K.K.) was added, and the tetrahydrofuran was completely evaporated off by reducing the pressure; the resultant product was used as the component A. The rhodium content of the resulting component A was 1.5% by weight.

By use of 0.1 g (0.012 mmol Rh) of the component A prepared above, ethylene was polymerized in the same manner as in Example 2. 2.54 g of polymer was obtained. The catalyst activity was 212000 g/mol-Rh. The [η] was 20.1 dl/g, which corresponds to a suffiently high molecular weight of 1,010,000.

### Example 6

Rhodium acetate supported on magnesium chloride was used as the component A. 0.24 g of rhodium (II) acetate dimer dihydrate and 8.0 g of magnesium chloride were placed under a nitrogen atmosphere in a 100-ml stainless steel ball mill, and were pulverized together for 48 hours to cause the rhodium compound to be supported on the magnesium chloride carrier. The rhodium content of the resulting component A was 1.18% by weight.

Ethylene was polymerized in the same manner as in Example 2 except that 0.5 g (equivalent to 0.056 mmol of Rh) of the component A prepared above was used. The yield of the polymer was 0.83 g. The catalyst activity was 14800 g/mol-Rh. The [η] of the polymer was 21.1 dl/g, which corresponds to sufficiently high molecular weight of 1,070,000.

### Example 7

Ethylene was copolymerized with propylene by use of the component A prepared in Example 2. A 100-ml reactor equipped with a stirrer was purged thoroughly with nitrogen. Therein, 30 ml of toluene, and 0.50 g of the component A prepared in Example 2 were placed. The reactor was cooled with liquid nitrogen. Thereafter, 1.0 mmol of triethylaluminium as the component B, 0.20 mol of ethylene, and 0.10 mol of propylene were added to the reactor sequentially, and the temperature of the reactor was raised quickly to 40°C to initiate the polymerization reaction. Three hours later, the reaction mixture was poured into a large amount of hydrochloric acid/methanol solution to stop the reaction. The yield of the ethylene-propylene copolymer was 2.9 g. The catalyst activity was 50000 g/mol-Rh. The propylene content of the polymer was 9.4 mol% according to ¹³C-NMR analysis. The [η] was 5.2 dl/g, which corresponds to a suffiently high molecular weight of 190,000. The melting point was 121°C.

### Example 8

A 100-ml stainless steel reactor equipped with a stirrer was purged thoroughly with nitrogen. Therein, 30 ml of toluene, and 0.021 g of ruthenium (III) chloride as the component A were placed. The reactor was cooled with liquid nitrogen. Thereafter, a solution of triethylaluminium (1.0 mmol) in toluene, and 0.20 mol of ethylene were added to the reactor sequentially, and the temperature of the reactor was brought quickly to 40°C to initiate the polymerization reaction. Three hours later, the reaction mixture was poured into a large amount of hydrochloric acid/methanol solution to stop the reaction. The yield of the polymer was 0.004 g. The catalyst activity per mol of ruthenium was 40 g/mol-Ru.

### Example 9

A ruthenium compound supported on an inorganic carrier of magnesium chloride was used as the component A. 0.21 g (1.0 mmol) of ruthenium (III) chloride and 8.0 g of magnesium chloride were placed under a nitrogen atmosphere in a 100-ml stainless steel ball mill, and were pulverized together for 48 hours to cause the ruthenium compound to be supported on the carrier. The ruthenium content of the resulting component A was 1.18% by weight.

Ethylene was polymerized in the same manner as in Example 8 except that 0.5 g (equivalent to 0.058 mmol of Ru) of the component A prepared above was used. The yield of the polymer was 0.15 g, and the catlyst activity was 2590 g/mol-Ru. The [η] of the polymer was 12.7 dl/g, which corresponds to a sufficiently high molecular weight of 57,000. The melting point of the polymer was 135°C according to DSC analysis.

### Example 10

Ethylene was polymerized by use of the component A prepared in Example 9, with diethylaluminium chloride as the component B. A 100-ml reactor was sufficiently purged with nitrogen. Therein 30 ml of toluene and 0.5 g of the component A prepared in Example 9 were placed. The reactor was cooled with liquid nitrogen, and a solution of diethylaluminium chloride (1.0 mmol) in toluene, and 0.20 mol of ethylene were sequentially added therein. The temperature was raised quickly up to 40°C to initiate the polymerization. Three hours later, the reaction mixture was poured into a large amount of hydrochloric acid/methanol solution to stop the reaction.

The yield of the polymer was 0.08 g. The catalyst activity was 1400 g/mol-Ru.

### Example 11

Ethylene was polymerized at 80°C by use of the component A prepared in Example 9.

A 1-liter stainless steel reactor equipped wih an electromagnetic stirrer was purged thoroughly with nitrogen. Therein 0.5 liter of toluene was placed and the internal temperature was controlled to 80°C. Thereto 1.0 mmol of triethylaluminium as the component B, and 1.0 g of the component A prepared in Example 9 were sequentially added. The pressure in the reactor was adjusted with nitrogen to 0.5 cm²G, and ethylene was fed continuously to keep the total pressure at 20 Kg/cm²G to conduct polymerization for 3 hours. The resulting polymer was separated from the solvent by filtration, and washed with hydrochloric acid/methanol, and then dried. 1.27 g of polymer was obtained. The catalyst activity was 1100 g/mol-Ru, and the [η] was 8.0 dl/g, which corresponds to a sufficiently high molecular weight of 370,000.

### Example 12

A ruthenium compound supported by silica was used as the component A. In a 200-ml glass flask, 0.14 g (0.70 mmol) of ruthenium (III) chloride was dissolved in 20 ml of dehydrated tetrahydrofuran. Thereto, 50 ml of a tetrahydrofuran solution containing 0.63 g of magnesium chloride prepared separately in another flask was added. Further thereto, 4.0 g of calcined and dried silica (#952, made by Fuji Davidson K.K.) was added, and the tetrahydrofuran was completely evaporated off by reducing the pressure; the resultant product was used as the component A. The ruthenium content of the resulting component A was 1.39% by weight.

By use of 0.5 g (0.069 mmol Ru) of the component A prepared above, ethylene was polymerized in the same manner as in Example 9. 1.25 g of polymer was obtained. The catlyst activity was 18000 g/mol-Ru. The [η] was 13.1 dl/g, which corresponds to a sufficiently high molecular weight of 590,000.

### Example 13

Ethylene was copolymerized with propylene by use of the component A prepared in Example 9. A 100-ml reactor equipped with a stirrer was purged thoroughly with nitrogen. Therein, 30 ml of toluene, and 0.50 g of the component A prepared in Example 9 were placed. The reactor was cooled with liquid nitrogen. Thereafter, 1.0 mmol of triethylaluminium as the component B, 0.20 mol of ethylene, and 0.10 mol of propylene were added to the reactor sequentially, and the temperature of the reactor was raised quickly to 40°C to initiate the polymerization reaction. Three hours later, the reaction mixture was poured into a large amount of hydrochloric acid/methanol solution to stop the reaction. The yield of the ethylene-propylene copolymer was 2.9 g. The catalyst activity was 1900 g/mol-Ru. The propylene content of the polymer was 9.9 mol% according to ¹³C-NMR analysis. The [η] was 4.7 dl/g, which corresponds to a suffiently high molecular weight of 170,000. The melting point of the polymer was 126°C.

### Example 14

Propylene was polymerized with the component A prepared in Example 2. A 100-ml reactor equipped with a stirrer was purged thoroughly with nitrogen. Therein 30 ml of toluene, and 0.50 g of the component A prepared in Example 2 were placed. The reactor was cooled with liquid nitrogen. Thereafter, 1.0 mmol of triethylaluminium and 0.5 mmol of diethylaluminium chloride as the component B, and 0.2 mol of propylene were introduced to the reactor sequentially, and the temperature of the reactor was raised quickly to 40°C to initiate the polymerization reaction. Three hours later, the reaction mixture was poured into a large amount of hydrochloric acid/methanol solution to stop the reaction. The yield of the polymer was 0.17 g. The catalyst activity was 2930 g/mol-Rh.

According to GPC (gel permeation chromatography) analysis, the polymer was a high polymer having a number-average molecular weight (Mn) of 16,000.

### Example 15

Propylene was polymerized in the same manner as in Example 14 except that the component A used was the one prepared in Example 9. The yield of the polymer was 0.06 g. The catalyst activity was 1000 g/mol-Ru. The molecular weight of the polymer was estimated to be as high as 13,000.

### Example 16

Propylene was polymerized in the same manner as in Example 14 except that the component A used was the one prepared in Example 5. The yield of the polymer was 0.98 g. The catalyst activity was 16400 g/mol-Rh.

### Example 17

Propylene was polymerized in the same manner as in Example 14 except that the component A used was the one prepared in Example 6. The yield of the polymer was 0.77 g. The catalyst activity was 1370 g/mol-Rh.

### Example 18

Propylene was polymerized in the same manner as in Example 14 except that the component A used was the one prepared in Example 12. The yield of the polymer was 0.088 g. The catalyst activity was 1280 g/mol-Ru.

### Example 19

A 100-ml stainless steel reactor equipped with a stirrer was purged thoroughly with nitrogen. Therein, 30 ml of toluene, and 0.026 g of rhodium (III) chloride trihydrate as the component A were placed. The reactor was cooled with liquid nitrogen. Thereafter, 1.0 mmol of triethylaluminium in toluene, 0.02 mol of vinyl acetate, and 0.20 mol of ethylene were added sequentially to the reactor, and the temperature of the reactor was raised quickly to 40°C to initiate the polymerization reaction. Three hours later, the reaction mixture was poured into a large amount of hydrochloric acid/methanol solution to stop the reaction. The yield of the EVA was 0.005 g. The catalyst activity per mol of rhodium was 50 g/mol-Rh.

### Example 20

A rhodium compound supported by an inorganic carrier of magnesium chloride was used as the component A. 0.263 g (1.0 mmol) of rhodium (III) chloride trihydrate and 8.0 g of magnesium chloride were placed under a nitrogen atmosphere in a 100-ml stainless steel ball mill, and were pulverized together for 48 hours to cause the rhodium compound to be supported on the magnesium chloride carrier. The rhodium content of the component A was 1.24% by weight.

Ethylene was copolymerized with vinyl acetate in the same manner as in Example 19 except that 0.5 g of the component A (equivalent 0.058 mmol of Rh) prepared as above was used. The polymer was obtained in an amount of 0.075 g. The catalyst activity was 1290 g/mol-Rh.

The nuclear magnetic resonance spectrum (¹³C-NMR) of the resulting polymer showed absorption at 169.5 ppm attributed to a carbonyl group and absorption at 74.4 ppm attributed to a carbon adjacent to an ester group. This is the spectrum shown at the top of Fig. 1. This NMR spectrum coincides sufficiently with the spectrum of commercial high-pressure EVA (Ultrathene #510, vinyl acetate content: 6% by weight, made by Tosoh Corporation). This is the spectrum shown at the bottom of Fig. 1 for reference. The infrared absorption spectrum of the polymer showed absorption of carbonyl at 1743 cm⁻¹, and absorption of methylene chain (skeleton) at 720 cm⁻¹. From these facts, the resulting polymer is estimated to be a random copolymer of ethylene and vinyl acetate (EVA). From the absorbance ratio of the methylene chain to the carbonyl, the content of the vinyl acetate in the EVA is estimated to be 5.0% by weight.

The number-average molecular weight (Mn) of the polymer measured by GPC was 2000, being sufficiently high, and the melting point measured by DSC was 106°C.

### Comparative Example 1

The copolymerization of ethylene with vinyl acetate was attempted in the same manner as in Example 1 except that 1 mmol of benzoyl peroxide, a radical initiator, was used as the polymerization catalyst instead of the component A and the component B. No polymer was obtained.

### Comparative Example 2

The copolymerization was attempted with a catalyst system composed of a combination of titanium tetrachloride supported on magnesium chloride with triethylaluminium which is well known as a polymerization catalyst for low-pressure polymerization of ethylene.

The catalyst component was prepared from 0.19 g of titanium tetrachloride and 8.0 g of magnesium chloride by co-pulverization with a ball mill in the manner as described in Example 20. By using 0.5 g of this catalyst component in place of the component A, copolymerization of ethylene with vinyl acetate was attempted in the same manner as in Example 20. However, no polymer was obtained.

### Comparative Example 3

The polymerization described in Example 20 was conducted without using vinyl acetate. 3.5 g of polymer was obtained. In ¹³C-NMR analysis and IR analysis of the polymer, no absorption of carbonyl was observed.

### Example 21

A 1-liter stainless steel reactor equipped with an electromagnetic stirrer was purged thoroughly with nitrogen. Therein 0.5 liter of toluene was placed and the internal temperature was controlled to be at 80°C. Thereto 1.0 mmol of triethylaluminium as the component B, and 1.0 g of the component A prepared in Example 20 were sequentially added. The pressure in the reactor was adjusted with nitrogen to 0.5 Kg/cm²G, and 0.05 mol of vinyl acetate was added therein. Ethylene was fed continously into the reactor to keep the total pressure at 20 Kg/cm²G and the polymerization was conducted for 3 hours. The resulting polymer was separated from the solvent by filtration, and washed by hydrochloric acid/methanol, and then dried. 0.32 g of EVA was obtained. The catalyst activity was 400 g/mol-Rh, and the content of vinyl acetate was 6.5% by weight.

### Example 22

A rhodium compound supported by silica was used as the component A. In a 100-ml glass flask, 0.18 g (0.68 mmol) of rhodium (III) chloride trihydrate was dissolved in 20 ml of dehydrated tetrahydrofuran. Thereto, 50 ml of a tetrahydrofuran solution containing 0.65 g of magnesium chloride prepared separately in another flask was added. Further thereto 3.8 g of calcined and dried silica (#952, made by Fuji Davidson K.K.) was added, and the tetrahydrofuran was completely evaporated off by reducing the pressure to prepare the component A. The rhodium content of the resulting component A was 1.50% by weight.

By use of 0.5 g (0.073 mmol Rh) of the component A prepared above, ethylene was copolymerized with vinyl acetate in the same manner as in Example 21. The polymerization product was separated from the silica and magnesium chloride by Soxhlet extraction with toluene. 0.20 g of EVA was obtained. The catalyst activity was 2750 g/mol-Rh. The content of vinyl acetate was 3.6% by weight.

### Example 23

A rhodium compound supported by an inorganic carrier of magnesium chloride was used as the component A. 0.24 g of rhodium (II) acetate dimer dihydrate and 9.0 g of magnesium chloride were placed under a nitrogen atmosphere in a 100-ml stainless steel ball mill, and were pulverized together for 48 hours to cause the rhodium compound to be supported on the carrier. The rhodium content of the component A was 1.18% by weight.

Ethylene was copolymerized with vinyl acetate in the same manner as in Example 19 except that 0.5 g of the component A (equivalent to 0.056 mmol of Rh) prepared as above was used. The polymer was obtained in an amount of 0.019 g. The catalyst activity was 340 g/mol-Rh, and the vinyl acetate content was 4.1 by weight.

## Claims

1. A process for producing a polyolefin through polymerization of α-olefin or ethylene-vinyl acetate copolymer through copolymerization of ethylene with vinyl acetate in the presence of a catalyst comprising a component A composed of at least one halogen or oxygen-containing compound of rhodium or of ruthenium and a component B composed of at least one organometallic compound of an element of Groups I to III of the periodic table.

2. A process as claimed in Claim 1 characterized in that component A is a halide or perhalate of rhodium or ruthenium or a hexahalorhodate or hexahaloruthenate, or an alkylester or a tris(alkylalkylonato) compound of rhodium or ruthenium, or a mixture therof.

3. A process as claimed in Claim 1 or Claim 2 characterized in that component A is used on its own or supported on a carrier.

4. A process as claimed in Claim 3 characterized in that the amount of rhodium or ruthenium compound carried by the carrier is from 0.001 to 30% by weight based on the weight of the carrier.

5. A process as claimed in any one of Claims 1 to 4 characterized in that component B is an alkyl metal compound, or metal-oxane compound.

6. A process as claimed in any one of Claims 3 to 5 characterized in that the carrier is carbon, a metal oxide or a metal halide or a substance convertible to a carrier by reaction.

7. A process as claimed in any one of Claims 1 to 6 characterized in that the quantity of the component A used is in the range of from 0.001 to 2.5 mol in terms of rhodium or ruthenium atoms per liter of the solvent or per liter of the reactor volume.

8. A process as claimed in any one of Claims 1 to 7 characterized in that the quantity of the component B used is in the range of from 0.02 to 50 mol in terms of the metal atoms of Groups I to III of the periodic table per liter of the solvent or per liter of the reactor volume.

## Patentansprüche

1. Verfahren zur Herstellung eines Polyolefins durch Polymerisation von α-Olefin oder eines Ethylen-Vinylacetat-Copolymers durch Copolymerisation von Ethylen mit Vinylacetat in Gegenwart eines Katalysators, der eine Komponente A, die aus zumindest einer halogen- oder sauerstoffhaltigen Verbindung des Rhodiums oder des Rutheniums besteht, und eine Komponente B, die aus zumindest einer organometallischen Verbindung eines Elementes der Gruppen I bis III des Periodensystems besteht, umfaßt.

2. Verfahren nach Anspruch 1, dadurch gekennzeichnet, daß die Komponente A ein Halogenid oder Perhalogenat des Rhodiums oder Rutheniums oder ein Hexahalogenrhodat oder Hexahalogenruthenat oder ein Alkylester oder eine Tris(alkylalkylonato)-Verbindung des Rhodiums oder Rutheniums oder ein Gemisch davon ist.

3. Verfahren nach Anspruch 1 oder Anspruch 2, dadurch gekennzeichnet, daß die Komponente A alleine oder getragen von einem Träger verwendet wird.

4. Verfahren nach Anspruch 3, dadurch gekennzeichnet, daß die Menge der Rhodium- oder Rutheniumverbindung, die vom Träger getragen wird, zwischen 0,001 und 30 Gewichts-% liegt, bezogen auf das Gewicht des Trägers.

5. Verfahren nach einem der Ansprüche 1 bis 4, dadurch gekennzeichnet, daß die Komponente B eine Alkylmetallverbindung oder eine Metalloxanverbindung ist.

6. Verfahren nach einem der Ansprüche 3 bis 5, dadurch gekennzeichnet, daß der Träger Kohlenstoff, ein Metalloxid oder ein Metallhalogenid oder ein durch Umsetzung in einen Träger umwandelbarer Stoff ist.

7. Verfahren nach einem der Ansprüche 1 bis 6, dadurch gekennzeichnet, daß die verwendete Menge der Komponente A im Bereich von 0,001 bis 2,5 mol bezüglich der Rhodium- oder Rutheniumatome pro Liter Lösungsmittel oder pro Liter Volumen des Reaktionsgefäßes liegt.

8. Verfahren nach einem der Ansprüche 1 bis 7, dadurch gekennzeichnet, daß die verwendete Menge der Komponente B im Bereich von 0,02 bis zu 50 mol bezüglich der Metallatome der Gruppen I bis III des Periodensystems pro Liter Lösungsmittel oder pro Liter Volumen des Reaktionsgefäßes liegt.

## Revendications

1. Procédé de production d'une polyoléfine par polymérisation d'une α-oléfine ou d'un copolymère d'éthylène et d'acétate de vinyle par copolymérisation de l'éthylène avec l'acétate de vinyle en présence d'un catalyseur comprenant un constituant A composé d'au moins un composé de rhodium ou de ruthénium halogéné ou contenant de l'oxygène et un constituant B composé d'au moins un composé organométallique d'un élément des groupes I à III du tableau périodique.

2. Procédé selon la revendication 1, caractérisé en ce que le constituant A est un halogénure ou un perhalate de rhodium ou de ruthénium ou un hexahalorhodate ou un hexahaloruthenate, ou un composé ester alkylique ou tris(alkylalkylonato) de rhodium ou de ruthénium, ou un mélange de ceux-ci.

3. Procédé selon la revendication 1 ou 2, caractérisé en ce que le constituant A est utilisé en tant que tel ou fixé sur un support.

4. Procédé selon la revendication 3, caractérisé en ce que la quantité de composé de rhodium ou de ruthénium fixée sur le support est comprise entre 0,001 et 30 % en poids par rapport au poids du support.

5. Procédé selon l'une quelconque des revendication 1 à 4, caractérisé en ce que le constituant B est un composé de métal alkylique, ou un composé de métal-oxane.

6. Procédé selon l'une quelconque des revendications 3 à 5, caractérisé en ce que le support est du carbone, un oxyde de métal ou un halogénure de métal ou une substance convertible en un support par réaction.

7. Procédé selon l'une quelconque des revendications 1 à 6, caractérisé en ce que la quantité du constituant A utilisée se situe dans la gamme comprise entre 0,001 et 2,5 moles en terme d'atomes de rhodium ou de ruthénium par litre du solvant ou par litre du volume du réacteur.

8. Procédé selon l'une quelconque des revendications 1 à 7, caractérisé en ce que la quantité du constituant B utilisée se situe est dans la gamme comprise entre 0,02 et 50 moles en terme d'atomes de métal des groupes I à III du tableau périodique par litre du solvant ou par litre du volume du réacteur.
